# EUROPÄISCHE PATENTANMELDUNG

(11) **EP 3 477 190 A1**
(43) Veröffentlichungstag der Anmeldung: **01.05.2019**
(21) Anmeldenummer: 18202282.2
(22) Anmeldetag: 24.10.2018
(51) Int. Cl.: F21V 5/00, F21V 17/00, F21V 17/02, G02B 7/02, F21S 4/28, F21Y 103/10, F21Y 115/10

(54) **OPTISCHES SYSTEM FÜR EINE LED LEUCHTE**

(30) Priorität: 24.10.2017 DE 102017124853
(71) Anmelder: TRILUX GmbH & Co. KG, 59759 Arnsberg (DE)
(72) Erfinder: Ganzer, Bernd, 58675 Hemer (DE)
(74) Vertreter: Lippert Stachow Patentanwälte Rechtsanwälte

(57) **Zusammenfassung**

Die Erfindung betrifft ein Optisches System für eine Leuchte, insbesondere für eine Lichtbandleuchte mit mindestens einem als LED-Modul (14; 40) ausgebildeten Leuchtmittel zur Erzeugung eines in einer Direktlichtrichtung strahlenden Lichtstroms sowie einer in der Direktlichtrichtung vor dem LED-Modul (14; 40) angeordneten Optik (18; 38) zur Erzeugung einer gewünschten Lichtverteilungskurve zur Ausleuchtung einer Sehaufgabe.

Zur einfachen Realisierung unterschiedlicher Lichtverteilungskurven mit einem optischen System ohne Änderung der Bauteile schlägt die Erfindung vor, dass zwischen dem mindestens einen LED-Modul (14; 40) und der Optik (18; 38) dargestellt ausgebildete Distanzhalter (18,4; 18,5)) vorgesehen sind, welche bei einer Drehung der Optik (18; 38) in mindestens zwei verschiedene Einbaulagen gewährleisten, dass die Optik in einer ersten Einbaulage lagefixiert, also kippfrei eine erste optische Distanz zu dem LED-Modul (14; 40) einnimmt, und die die Optik (18, 38) in einer zweiten, von der ersten verschiedenen Einbaulage eine von der ersten optischen Distanz zweite optische Distanz, ebenfalls lagefixiert und kippfrei einnimmt.

## Beschreibung

Die Erfindung betrifft ein optisches System für eine LED-Leuchte, insbesondere eine Langfeldleuchte, im Besonderen eine Lichtbandleuchte, ausgebildet zur lösbaren Verbindung mit einer mit einem Bauträger verbundenen Tragschiene zur Aufnahme und Führung einer Durchgangsverdrahtung.

Die Lichtbandleuchte umfasst einen mit der Tragschiene lösbar verbindbaren Geräteträger mit einer Geräteträgeroberseite ausgebildet zur Anordnung von elektrischen und/oder elektronischen Komponenten für die Lichtbandleuchte sowie einer Geräteträgerunterseite ausgebildet zur Anordnung eines LED-Leuchtmittels zur Erzeugung eines in einer Direktlichtrichtung strahlenden Lichtstroms, vorzugsweise auf der Geräteträgeroberseite angeordnete elektrische Komponenten, mindestens ein auf der Geräteträgerunterseite angeordnetes LED-Modul, eine in der Direktlichtrichtung vor dem mindestens einem LED-Modul angeordnete Optik ausgebildet zur Lichtlenkung des Lichtstroms zur Realisierung einer mit der Lichtbandleuchte umzusetzenden Sehaufgabe.

Als Lichtbandleuchte ist eine selbstständige Leuchte zu verstehen, die also selbstständig funktionsfähig ist, also mit einer Versorgungsspannung zum Einzelbetrieb gespeist werden kann. Darüber hinaus besteht aber auch die Möglichkeit, mehrere Lichtbandleuchten zur Bildung eines sogenannten Lichtbandsystems miteinander zu verbinden, welches sich z.B. von einer Decke herabhängen oder an einer Decke über mehrere Meter erstrecken kann, wobei die einzelnen Lichtbandleuchten mit ihren jeweiligen Stirnseiten aneinander angrenzend unter einer Decke angeordnet sind. Ein derartiges Lichtbandsystem umfasst normalerweise eine durchgehende Tragschiene, wobei die einzelnen, aneinander gesetzten Bauteile der Tragschiene die Durchgangsverdrahtung für das Lichtbandsystem aufnehmen und vorzugsweise Stecker bzw. Kupplungen zur Verbindung der einzelnen Tragschienenelemente untereinander umfassen.

### Stand der Technik

Im Besonderen betrifft die Erfindung ein optisches System einer Leuchte mit mindestens einem als LED-Modul ausgebildeten Leuchtmittel zur Erzeugung eines in einer Direktlichtrichtung strahlenden Lichtstroms sowie einer in der Direktlichtrichtung vor dem LED-Modul angeordneten Optik zur Erzeugung einer gewünschten Lichtverteilungskurve zur Ausleuchtung einer Sehaufgabe.

Bestehende Leuchten, insbesondere Lichtbandleuchten umfassen eine an einer Decke, einem Bauträger oder dergleichen befestigbare Tragschiene, die z.B. direkt mit der Decke verschraubt oder aber über Ketten oder Seile von der Decke abgehängt sein kann im Rahmen des Einbaus in eine abgehängte Decke. Die Tragschiene nimmt die Durchgangsverdrahtung auf, wird also mit der Versorgungsspannung verbunden. Die Tragschiene ist üblicherweise als winkelförmig gekantetes Blechprofil ausgebildet, das eine im Wesentlichen kanal- oder rinnenförmige Geometrie aufweist, die in Einbaulage oben geschlossen ist und eine in Einbaulage untere Tragschienenöffnung aufweist. In diese Öffnung ist ein Geräteträger einsetzbar bzw. mit der Tragschiene verbindbar. Vorzugsweise sind an dem Geräteträger hierzu in bestimmten vordefinierten Abständen Haltefedern vorgesehen, welche den Geräteträger lösbar an der Tragschiene befestigten. Die üblicherweise aus gekanteten Blechprofilen bestehenden Tragschienen und der Geräteträger bilden im zusammengebauten Zustand eine geschlossene Geometrie, wobei üblicherweise die rinnenförmige Tragschiene in Einbaulage unterseitig durch den Geräteträger deckelartig verschlossen wird.

An dem im Wesentlichen flächigen Geräteträger sind vorzugsweise auf der Geräteträgeroberseite üblicherweise elektrische Leuchtenkomponenten angeordnet, wie z.B. Stecker, Anschlussklemmen, Verdrahtungen und ein Treiber, häufig auch als LED-Konverter (LEDC) oder Vorschaltgerät bezeichnet zur Umwandlung des Netzstroms in ein für das jeweilige Leuchtmittel geeigneten Versorgungsstrom. An der Geräteträgerunterseite sind hingegen heute insbesondere als LED-Module (häufig abgekürzt als LEDM bezeichnet) ausgebildete Leuchtmittel befestigt und vor diesen wiederum ein Optikelement zur Lichtlenkung und Lichtbündelung eines von den LED-Modulen erzeugten Lichtstroms zur Realisierung einer definierten Sehaufgabe. Das LED-Modul und die Optik sind üblicherweise als Kunststoffteile ausgebildet.

Bei derartigen und anderen Leuchten ist es beim Stand der Technik erforderlich, für die Realisierung von unterschiedlichen Beleuchtungsaufgaben zur Realisierung von geänderten Lichtverteilungskurven, z.B. zur Anpassung an eine geänderte Sehaufgabe, z.B. zur Änderung von einem stark gebündelten Direktlicht auf ein eher breiter strahlendes Licht, z.B. zur Beleuchtung einer Verkaufsfläche, unterschiedliche Optiken für diese unterschiedlichen Sehaufgaben und gewünschten Lichtverteilungskurven vorzusehen. Dieses bedingt eine hohe Variantenzahl der Optiken und kann mitunter relativ kompliziert sein.

### Technisches Problem / Aufgabe

Insofern beschäftigt sich die Erfindung mit dem technischen Problem, diese Nachteile zumindest teilweise zu vermeiden und eine Leuchte, insbesondere eine Leuchte, insbesondere eine Lichtbandleuchte vorzusehen, deren Leuchtencharakteristik, also Lichtverteilungskurve (LVK) einfach mit möglichst einfachen Mitteln zu verändern ist. Erfindung

Diese Aufgabe wird in der einfachsten Ausführungsform bereits durch die Merkmale des unabhängigen Anspruchs gelöst; vorteilhafte, aber nicht zwingende Weiterentwicklungen sind in den Unteransprüchen wiedergegeben.

In der einfachsten Ausführungsform wird dieses bei einem optischen System einer Leuchte der eingangs genannten Art bereits dadurch gelöst, dass zwischen dem mindestens den Fügepartnern, also dem mindestens einen LED-Modul und der Optik, dergestalt ausgebildete Distanzhalter vorgesehen sind, dass diese bei einer Drehung der Optik in mindestens zwei verschiedene Einbaulagen, eine Ersteinbaulage und eine von dieser verschiedene Zweiteinbaulage gewährleisten, dass die Fügepartner in jeder Einbaulage optisch optimiert, also insbesondere lagefixiert, optisch optimiert und kippfrei ausgerichtet sind. Die zwischen den Fügepartnern wirkenden Distanzhalter bzw. Distanzpartner sind so gestaltet, dass die Fügepartner in der Ersteinbaulage eine erste optische Distanz zueinander einnehmen und in der Zweiteinbaulage eine von der ersten optischen Distanz zweite optische Distanz. Das optische System ist dabei aber auch so gestaltet, dass der Zusammenbau entweder in der Ersteinbaulage oder der Zweieinbaulage möglich ist, dann aber immer die korrekte und auf die Einbaulage optimierte optische Distanz zwischen den Fügepartner gewährleistet ist bzw. vorliegt.

Das erfindungsgemäße optische System einer Leuchte,_insbesondere einer Langfeldleuchte, im Besonderen eine Lichtbandleuchte, ausgebildet zur lösbaren Verbindung mit einer mit einem Bauträger verbundenen Tragschiene zur Aufnahme und Führung einer Durchgangsverdrahtung, umfasst zwei komplementär in Einbaulage zusammenwirkende bzw. zusammensetzbare und im Wesentlichen, zumindest abschnittsweise flächige Fügepartner. Ein Fügepartner ist ein im Wesentlichen flächiges LED-Modul, das mit seiner Fläche zumindest abschnittsweise eine Modulebene definiert und ein sich in dieser entlang einer Längsachse erstreckende Modullängsachse mindestens eine LED zur Erzeugung eines in einer Direktlichtrichtung strahlenden Lichtstroms aufweist. Als zweiter Fügepartner ist ferner in der Direktlichtrichtung in Einbaulage vor dem mindestens einen LED-Modul eine Optik zur Erzeugung einer gewünschten Lichtverteilungskurve für eine Ausleuchtung einer Sehaufgabe angeordnet. Die Optik definiert eine Optikebene und weist eine sich in dieser entlang einer Längsachse erstreckende Optiklängsachse auf. Eine sich entlang einer Längsachse des aus LED-Modul und Optik in Einbaulage gebildeten optischen Systems definiert eine entlang dessen erstreckende - gedachte - Systemlängsachse, zu der sich mindestens drei voneinander beabstandete und sich quer zur Systemlängsachse erstreckende - gedachte - Querachsen erstrecken. Quer zu diesen Querachsen erstrecken sich beidseitig äquidistant, also auf gleicher Entfernung von der in der Mitte des optischen Systems angeordneten Systemlängsachse je eine Distanzhaltermittelachse. Entlang jeder dieser Distanzhalterlängsachsen ist ein im Wesentlichen stabförmiger Distanzhalter ausgebildet, der sich von einem proximalen, mit einem ersten Fügepartner verbundenen Distanzhalterunterende bis zu einem distalen Distanzhalteroberende erstreckt. An diesem Distanzhalteroberende ist jeweils eine Zentrierung ausgebildet, die in Einbaulage zentrierend in je eine koaxial zur Distanzhalterlängsachse ausgebildete und korrespondierend zur spielfreien Aufnahme der komplementären Zentrierung des Distanzhalters ausgebildete Öffnung in dem angrenzenden Fügepartner einsteckbar ist. Jeweils zwei auf einer Querachse angeordnete Distanzhalter bilden ein Distanzhalterpaar. Jeweils ein Distanzhalter eines Distanzhalterpaars umfasst auf einer Querachse mindestens eine Erstauflagefläche, die eine sich zur Ebene des angrenzenden Fügepartners erstreckende Erstauflageebene definiert und ferner ausgebildet ist zur zentrierenden Auflage des komplementären bzw. angrenzenden Fügepartners. In dem in Einbaulage angrenzenden Fügepartner sind also koaxial um die von der Systemlängsachse äquidistant beabstandete Distanzhalterlängsachsen Öffnungen zur Bildung eines Öffnungspaars ausgebildet, von denen eine erste Öffnung lediglich ausreichend groß für den Durchtritt bzw. das Einstecken der Zentrierung eines Distanzhalters ist, die zweite Öffnung jedoch entsprechend größer für den Durchtritt der ersten Auflagefläche ausgebildet ist. Die auf einer Querachse somit an beiden Fügepartnern ausgebildeten Distanzhalter- und Öffnungspaare sind somit jeweils immer nur in entweder der Erst- oder der Zweieinbaulage jeweils korrespondierend zu dem zugehörigen Fügepartner, um somit immer nur in einer Einbaulage den optisch optimierten und korrekten Einbau zu gewährleisten. Die kippfreie und lagefixierte Ausrichtung der Fügepartner bestehend aus Distanzhalterpaaren und Fügepartnerpaaren in beiden Einbaulagen im Verhältnis zueinander wird schließlich dadurch gewährleistet, dass die Fügepartnerpaare von mindestens zwei der drei Querachsen entsprechend ausgebildet, also gleich angeordnet sind, das andere Fügepartnerpaar aber genau anders ausgerichtet ist, also um 180 Grad gedreht ist.

Das optische System umfasst also zwei im Wesentlichen flächige Bauteile, welche die Fügepartner darstellen, nämlich die Optik, welche vorzugsweise zumindest eine flächige, lichtdurchlässige Lichtaustrittsebene umfasst, sowie mindestens ein davon in Einbaulage beabstandetes und komplementär ausgebildetes LED Modul. Es liegt im Rahmen der Erfindung mehrere LED-Module vorzusehen, die in Einbaulage kollinear mit den Modullängsachsen mit stirnseitigen Enden angrenzend aneinander in dem optischen System angeordnet sind.

In Einbaulage erstrecken sich also die gedachten Längsachsen und Querachsen auf den Fügepartnern kollinear und zwar beabstandet voneinander über die Distanzhalter, welche zentrierend in die entsprechenden Öffnungen des komplementären Fügepartners eingreifen. Durch die erfindungsgemäße Ausbildung ist stets gewährleistet, dass sich die Distanzhalterlängsachsen in Einbaulage jeweils koaxial zu den korrespondierenden Öffnungen des komplementären Fügepartners erstrecken. Damit wird gewährleistet, dass die Fügepartner stets optisch optimal ausgerichtet sind entlang einer gemeinsamen optischen Systemlängsachse, welche sich üblicherweise kollinear zur Längsachse der Leuchte erstreckt. Auch die Querachsen erstrecken sich also in Einbaulage auf beiden Fügepartnern kollinear auf der Modulebene und der Optikebene, und zwar quer erstreckend zur Systemlängsachse und sind beabstandet voneinander über die Distanzhalter.

Die Optik ist vorzugsweise als lichtdurchlässiges Bauteil ausgebildet. Ausführungsformen sehen vor, dass die Optikebene durch eine Lichtaustrittsfläche bzw. - ebene definiert wird.

Bei der bevorzugten Ausführungsform sind die mindestens drei entlang der Systemlängsachse voneinander beabstandeten Distanzhalterpaare an einem Fügepartner ausgebildet und die korrespondierenden Öffnungspaare an dem komplementären anderen Fügepartner. Es liegt jedoch grundsätzlich auch im Rahmen der Erfindung, die Distanzhalter eines Distanzhalterpaars an beiden Fügepartnern und die Öffnungen eines Öffnungspaars entsprechend auch an beiden Fügepartnern auszubilden.

Bevorzugt sind die Distanzhalter jedoch an der Optik, insbesondere innenseitig an der lichtdurchlässigen Lichtaustrittfläche ausgebildet, vorzugsweise einstückig an dieser angeformt. Diese können aber auch mit dem Fügepartner verbunden ausgebildet sein. Insofern sind die Öffnungen dann vorzugsweise in dem bzw. den LED-Modulen ausgebildet.

Eine Ausführungsform sieht vor, dass jeweils ein Distanzhalter eines Distanzhalterpaars auf einer Querachse lediglich die Zentrierung und die Erstauflagefläche umfasst, welche eine erste Auflageebene definiert. Der jeweils andere Distanzhalter eines Distanzhalterpaars auf einer Querachse umfasst neben der entlang der Distanzhalterlängsachse angeordneten Zentrierung und dem sich ebenfalls in der Erstauflageebene erstreckenden Erstauflager zudem ein von diesem Erstauflager ausgebildetes Zweitauflager, welches eine distale bzw. - obere - Auflageebene definiert, die sich also distal von der somit - unteren - Erstauflageebene erstreckt.

Vereinfacht ausgedrückt ist der erste Distanzhalter eines Distanzhalterpaars auf einer Querachse einstufig und der zweite Distanzhalter des Distanzhalterpaars zweistufig ausgebildet, wobei jeweils die unteren, näher zum Distanzhalterunterende ausgebildeten Stufen der beiden Distanzhalter eines Distanzhalterpaars auf einer Querachse sich auf einer Ebene erstrecken. Die Stufenübergänge zwischen den Ebenen müssen dabei nicht rechtwinklig ausgebildet sein, was aber die bevorzugte Ausbildung darstellt.

Die erste, sich in der erstem Auflageebene und diese definierende Auflagefläche kann entweder stufenartig ausgebildet entlang der Distanzhalterlängsachse zum Distanzhalterunterende hin ausgebildet sein als Verbreiterung des Distanzhalters gegenüber der Distanzhaltermittelachse, wonach sich der Distanzhalter sodann von dieser Erstauflagefläche zum Distanzhalterunterende ohne weitere Absätze erstreckt. Die die Erstauflageebene definierende Erstauflagefläche kann aber auch durchgehend ausgebildet sind, z.B. als Bestandteil eines Bauteils der Leuchte oder des optischen Systems ausgebildet sein, so z.B. eine Leiste der Optik, auf deren Oberseite in Längsrichtung beabstandet Distanzhalter bzw. Distanzhalterpaare ausgebildet sind.

An dem korrespondierend ausgebildeten anderen Fügepartner des optischen Systems sind in Einbaulage auf sich kollinear zu den Querachsen des ersten Fügepartners quer zur Fügepartnerlängsachse dieses Fügepartners erstreckendende - zumindest gedachte - Querachsen vorgesehen, die wie beim ersten Fügepartner in Leuchtenlängsrichtung voneinander beabstandet sind. Koaxial zu den Distanzhalterpaaren ersteckende Öffnungspaare sind also ebenfalls entlang der Leuchtenlängsachse voneinander so auf den Querachsen beabstandet, dass die Mittelpunkte der Öffnungen mit den Mittelachsen der Distanzhalter in Einbaulage zusammenfallen, sich also koaxial erstrecken, und zwar quer zur Leuchtensystemlängsachse. Die Öffnungen eines Öffnungspaares auf einer Querachse weisen jeweils unterschiedliche Größen auf, und zwar je eine kleinere Zentrieröffnung ausgebildet nur zum Durchtritt der distalen Zentrierung eines korrespondierenden Distanzhalterpaars sowie einer größeren Auflageröffnung, welche auch zum Durchtritt des größeren Zweitauflagers des korrespondierenden Distanzhalterpaars ausgebildet ist.

Auf diese Weise sind an den Distanzaltern eines Distanzhalterpaars auf einer Querachse mindestens zwei Auflageebenen ausgebildet, und zwar eine proximaler gelegene, untere Auflageebene sowie eine in Einbaulage distaler gelegene obere Auflageebene. Durch Drehung der Fügepartner um 180 Grad fluchten die Distanzhalterlängsachsen der Distanzhalterpaare auf dem ersten Fügepartner des optischen Systems immer mit den Mittelpunkten der Öffnungspaare des zweiten Fügepartners des optischen Systems, so dass Fügepartner in den Ausrichtungen unterschiedlich weit voneinander beabstandet sind, weil unterschiedliche, aber gleichwohl komplementär angeordnete Auflageflächen zum Einsatz kommen.

Die entlang einer Querachse des optischen Systems angeordneten Fügepartner zwischen den Bestandteilen des optischen Systems, umfassend mindestens ein LED-Modul und mindestens eine Optik, sind also jeweils paarweise zur Bildung von Fügepartnerpaaren auf mehreren Querachsen angeordnet, umfassen also jeweils auf sich in Einbaulage koaxial erstreckende und voneinander beabstandete Querachsen Distanzhalterpaare und auf koaxialen Querachsen des komplementären Fügepartners angeordnete und mehrere Öffnungspaare, wobei die Querachsen auf beiden Fügepartnern äquidistant zueinander entlang einer sich in Einbaulage koaxial erstreckenden optischen Längsachse angeordnet sind, so dass die Mittelpunkte der Öffnungen sich in Einbaulage koaxial zu den korrespondierenden Distanzhaltermittelachsen erstrecken. Die Fügepartnerpaare auf einer Querachse sind jeweils unterschiedlich ausgebildet und zudem sind die Fügepartnerpaare auf mindestens zwei entlang der optischen Längsachse voneinander beabstandeten Querachsen gleich ausgebildet, jedoch die unmittelbar aneinander angrenzenden Fügepartnerpaare alternierend unterschiedlich.

Die Mittelachsen der paarweise in Leuchtenquerrichtung angeordneten Öffnungspaare erstrecken sich in Einbaulage also koaxial zu den Längsachsen der korrespondierenden und mit diesen in Einbaulage zusammenwirkenden Distanzhalterlängsachsen und den an deren Distalenden ausgebildeten Zentrierungen. Somit ist gewährleistet, dass bei Drehung der Fügepartner um 180 Grad im Verhältnis zueinander in mindestens zwei verschiedene Einbaulagen, diese in Leuchtenlängsrichtung zueinander beabstandeten auf einer Leuchtenquerachse ausgebildeten Distanzhalterpaare so mit den in Leuchtenlängsrichtung koaxial zu den jeweiligen Distanzhalterpaaren ausgebildeten Öffnungspaaren zusammenwirken, dass das mindestens eine LED-Module in einer ersten Ersteinbaulage eine erste Distanz zu der Optik einnimmt, und in mindestens einer zweiten, von der ersten Ersteinbaulage verschiedenen Zweiteinbaulage eine von der ersten Distanz unterschiedliche zweite Distanz einnimmt.

Die Fügepartner des optischen Systems sind also ausgebildet, um die Optik und das LED-Modul in unterschiedlichen Einbaulagen in unterschiedlichen optischen Sollabständen zu verbinden, und zwar vorzugsweise durch einfaches Drehen der Optik, insbesondere um 180 Grad um eine mittige Drehachse, die sich insbesondere senkrecht erstreckt auf der durch das LED-Modul definierten Ebene.

Es liegt auch im Rahmen der Erfindung, mehr als zwei Einbaulagen vorzusehen, obwohl dieses für die meisten Anwendungsfälle nicht zweckdienlich sein dürfte.

Der Distanzunterschied zwischen den Fügepartnern des optischen Systems in den unterschiedlichen Einbaulagen (Erst- und Zweiteinbaulage) bei gleichzeitiger kippfreier Ausrichtung in der jeweiligen optischen Sollposition wird dadurch erzielt, dass die Fügepartnerpaarungen, also die Distanzhalterpaare und Öffnungspaare an mindestens drei aneinander angrenzenden Querachsen auf einer Seite der Systemlängsachse abwechselnde Ausbildungen der Distanzhalter des gleichen Typs (zweistufig/dreistufig) aufweisen.

Bei einer Ausführungsform kann ein Fügepartner, z.B. die Optik, selbst unterschiedliche Ebenen umfassen, die in Einbaulage unterschiedlich weit von dem anderen Fügepartner, z.B. dem LED-Modul entfernt sind. Beispielsweise kann die Optik einen mittleren optisch wirksamen Bereich umfassen, der auf einer ersten Ebene angeordnet ist, sowie seitlich von diesem optischen Bereich angeordnete Befestigungsbereiche zur Befestigung an dem Fügepartner, z.B. der Geräteträgerunterseite oder einem Leuchtengehäuse, umfassen, welche gegenüber dem optischen Bereich unterschiedlich hoch angeordnet sind bzw. auf einer anderen Ebene angeordnet sind. Diese Befestigungsbereiche können z.B. als seitliche Leisten ausgebildet sein, die gegenüber dem mittleren optisch wirksamen Bereich nach oben versetzt sind. Somit wird bereits durch Anlage der Befestigungsbereiche der Optik an dem Fügepartner die Fixierung der Optik in der Ersteinbaulage in der ersten optischen Sollposition realisiert. Die vorzugsweise an den Befestigungsbereichen zusätzlich ausgebildeten Distanzhalter ermöglichen sodann die Realisierung eines von der Ersteinbaulage unterschiedlich optischen Abstands in der Zweiteinbaulage durch Drehung der Optik.

Vorzugsweise ist die erste Distanz in der Ersteinbaulage kleiner als die zweite Distanz in der Zweiteinbaulage, so dass der Abstand der LEDs zur Optik in der Ersteinbaulage geringer ist als in der Zweiteinbaulage. Somit wird in der Ersteinbaulage eine stärker gebündelte Lichtverteilungskurve realisiert als in der Zweiteinbaulage.

Die Distanzhalter umfassen also jeweils ein proximales Distanzhalterunterende, mit welchem diese mit einem der Bauteile des optischen Systems, also mit dem Geräteträger oder der Optik, verbindbar bzw. verbunden sind und erstrecken sich distal von diesem Befestigungsende zunächst bis zu dem weiter von der Mittelachse des Distanzhalters entfernten und sich in der Erstauflageebene erstreckenden Erstauflagefläche, von dem sich dann bei einem einstufig ausgebildeten Distanzhalter (A) distal unter Bildung einer ersten Stufe mittig ein als Zentrierung fungierender Fortsatz erstreckt.

Bei dem zweistufig ausgebildeten Distanzhalter (B) erstreckt sich distal von dem sich in der Erstauflageebene erstreckenden Erstauflager unter Bildung einer zweiten Stufe ein Zwischenabsatz, an den dann wiederrum distal erstreckend die Zentrierung vorgesehen ist. Dabei bildet die erste Stufe die untere, also proximale Erstauflagefläche und die zweite Stufe die obere, also distale Zweitauflagefläche, wobei die proximale Erstauflagefläche in der Erstauflageebene weiter von der Mittellängsachse des Distanzhalters entfernt ist als die distale Zweitauflagefläche in der Zweitauflageebene, von der sich dann distal entlang der Mittellängsachse des zweistufigen Distanzhalters die Zentrierung erstreckt.

Damit die Auflageflächen der verschiedenen Distanzhalter immer in die korrespondierenden Ausnehmungen des Fügepartners eingreifen, sind diese Distanzhalter so an den Fügepartnern angeordnet, dass deren jeweilige Mittellängsachsen bei der Drehung in die verschiedenen Einbaulagen immer an derselben Stelle liegen, sich die Mittelpunkte der Öffnungen eines Öffnungspaares also immer koaxial zu den Distanzhaltermittelachsen der korrespondierenden Distanzhalter erstrecken.

Zum Gewährleisten der stets kippfreien und optisch optimierten Ausrichtung der Fügepartner in den beiden Einbaulagen und gleichzeitig auch zur Sicherstellung der stets optisch korrekten Montage sind die aus den Distanzhalterpaaren und Öffnungspaaren gebildeten Fügepartnerpaare der in Einbaulage sich kollinear aber über die Distanzhalter voneinander beabstandet in der Optik- und der Modulebene erstreckenden, gedachten Querebenen so ausgebildet, dass diese Fügepartnerpaare an mindestens drei entlang der Systemlängsachse aneinander angrenzenden Querachsen so angeordnet sind, dass die Fügepartnerpaarungen auf den zwei äußeren Querachsen in dieser aus drei Querachsen gebildeten Querachsengruppe gleich ausgerichtet sind, wohingegen diesen beiden äußeren Querachsen eingeschlossenen mittleren Querachse genau umgekehrt ausgerichtet ist, also um 180 Grad im Verhältnis zu den beiden äußeren Querachsen im Verhältnis zur Systemlängsachse ausgebildet ist.

Diese stets kippsichere Verbindung und Anordnung der beiden Fügepartner in beiden Einbaulagen wird also durch eine Auflage realisiert, die stets mindestens eine 3-Punkt-Auflage realisiert. Da das optische System immer mindestens drei Querachsen umfasst, also jeweils drei Distanzhalterpaare und Öffnungspaare entlang der Systemlängsachse beabstandet voneinander vorgesehen sind, und ferner die Bedingung erfüllt sein muss, dass bei mindestens zwei nicht in Systemlängsrichtung unmittelbar aneinander angrenzend aneinander angeordneten Querachsen die Fügepartnerpaare bestehend aus Distanzhalterpaaren und Öffnungspaaren gleich ausgerichtet sind, wohingegen die zwischen diesen beiden äußeren Querachsen gelegene Querachse eine genau umgekehrt ausgerichtete Fügepartnerpaarung aus Distanzhalterpaar und Öffnungspaar aufweist, wird also gewährleistet, dass die Fügepartner immer an 3- Punkten im Verhältnis zueinander aufliegen. Da die Distanzhalterpaare und Öffnungspaare von zwei aneinander angrenzenden Querachsen in Systemlängsrichtung unterschiedlich ausgebildet sind, also vorzugsweise aneinander angrenzend in Systemlängsrichtung auf einer Seite der Systemlängsachse keine zwei gleich ausgebildeten Distanzhalter und Öffnungen vorgesehen sind, jedoch wieder der nächste Distanzhalter auf der sich anschließenden Querachse wie der erste Distanzhalter und dieses auf beiden Seiten des optischen Systems von der Systemlängsachse spiegelsymmetrisch ist, wird gewährleistet, dass die beiden Fügepartner sowohl in der Erst- also auch in der Zweitausrichtung kippsicher und in der optischen Sollposition miteinander verbunden sind.

Durch diese so realisierte 3-Punkt-Auflagerung ist gewährleistet, dass die Fügepartner immer zumindest auf drei sich in derselben Auflageebene erstreckenden Auflageflächen aufliegen, von denen mindestens zwei Auflageflächen auf derselben Seite von der Systemlängsachse aufliegen, die Distanzhalter und korrespondierenden Öffnungen auf dieser Seite also gleich ausgebildet sind, wohingegen die dazwischen liegende Fügepartnerpaarung (Distanzhalterpaar/Öffnungspaar) genau umgekehrt ausgerichtet ist.

Sofern das optische System länger ausgebildet ist und mehrere Querachsen umfasst, kann diese 3-Punkt-Auflagerung in Systemlängsrichtung wiederholt werden. Bevorzugt sind jedoch zumindest an den Enden des optischen Systems diese 3-Punkt-Auflager ausgebildet, so dass dort immer eine Querachsengruppe umfassend drei nebeneinander liegende und dergestalt ausgebildete Querachsen vorgesehen sind.

Somit kann durch einfache Drehung der Optik um den mittleren Drehpunkt mit demselben optischen System umfassend Optik und mindestens ein LED-Modul zwei unterschiedliche optische System realisiert werden. Vorzugsweise beträgt der Höhenunterschied zwischen der Erst- und Zweiteinbaulage eines LED-Moduls im Verhältnis zur Optik zwischen 0,3 bis 2 mm, bevorzugt 0,5 bis 0,7 mm, besonders bevorzugt 0,5 mm, wobei sich der Abstrahlwinkel z.B. von ca. 20 auf ca. 28 Grad verändert.

Naturgemäß sind die Öffnungen geometrisch angepasst an die distale Zentrierung des korrespondierenden Distanzhalters, können also entsprechend rund oder eckig sein, können aber auch andere Geometrien aufweisen oder natürlich auch beliebige Kombinationen aufweisen.

Die Öffnungen können zudem randseitig offen oder allseitig geschlossen an dem jeweiligen Fügepartner ausgebildet sein.

Die Distanzhalter sind stabförmig ausgebildet und dabei vorzugsweise mit einheitlich eckigem oder rundem Querschnitt ausgebildet, können aber auch Kombinationen aufweisen, solange die in Einbaulage zusammenwirkenden Fügepartnerpaarungen stets komplementär ausgebildet sind.

Für möglichst geringe optische Störeinflüsse sind die Distanzhalter vorzugsweise stabförmig ausgebildet, z.B. mit rundem oder mit rechteckigem Querschnitt. Obwohl diese stabförmige Ausbildung bevorzugt ist, können die Distanzhalter auch als durchgehende Leisten oder Stege ausgebildet sein.

Zur weiteren Reduzierung von optischen Störeinflüssen sind die Distanzhalter ferner möglichst optisch neutral gestaltet, insbesondere möglichst durchsichtig.

Bei der bevorzugten Ausführungsform sind die Distanzhalter an der Optik ausgebildet, insbesondere einstückig an dieser angeformt und die Erst- und Zweitausnehmungen an dem LED-Modul.

Es hat sich als zweckmäßig erwiesen, jeweils zwei vorzugsweise stabförmig ausgebildete Distanzhalter in Leuchtenquerrichtung zueinander beabstandet vorzugsweise auf gleicher Länge, mit gleicher Mittellängsachse entlang der Leuchtenlängsachse zur Bildung von Distanzhalterpaaren anzuordnen. Von diesen Distanzhalterpaaren können mehrere entlang der Leuchtenlängsachse vorgesehen sein, die vorzugsweise äquidistant in Leuchtenlängsrichtung zueinander beabstandet sind. Es sei angemerkt, dass die Distanzhalter eines Distanzhalterpaars nicht notwendigerweise in Leuchtenquerrichtung gegenüberliegend auf gleicher Höhe in Leuchtenlängsrichtung angeordnet sein müssen, obwohl dieses vorteilhaft ist.

Vorzugsweise sind die Distanzhalter bzw. Distanzhalterpaare beidseitig von einem auf der optischen Leuchtenlängsachse angeordneten LED-Modul angeordnet, und zwar besonders bevorzugt paarweise auf gleicher Länge in Leuchtenlängsachse dieses LED-Modul seitlich einfassend.

Für eine kippfreie Anordnung der Fügepartner im Verhältnis zueinander in Einbaulage ist es zweckmäßig, wenn jedenfalls zwei Fügeelemente entlang einer Querachse unterschiedlich ausgebildet sind, also entweder zweistufig A oder dreistufig B, und zwei in Leuchtenlängsrichtung auf zwei angrenzenden Querachsen angeordnete Fügeelemente ebenfalls unterschiedlich sind, also entweder zweistufig A oder dreistufig B, so dass also die Fügepartnerpaare von zwei Systemlängsrichtung angrenzenden Querachsen um 180 Grad verdreht um die Mittellängsachse angeordnet bzw. ausgebildet sind.

Bei der einstufigen Ausbildung A weist der Distanzhalter z.B. an einem proximal von der distalen Zentrierung auf der Erstauflageebene eine Erstauflagefläche zur Bildung einer proximalen, unteren Erstauflagefläche auf, die sich seitlich von der mittigen Zentrierung stufenartig erstreckt und somit auch zwei durch die Zentrierung getrennte Flächenabschnitte umfassen kann.

Die zweistufige Ausbildung B umfasst an dem distalen Distanzhalteroberende ebenfalls die mittig um die Distanzhalterlängsachse ausgebildete Zentrierung und zudem auch die untere, proximal gelegene und sich ebenfalls in der Erstauflageebene ersteckende Erstauflagefläche. Zusätzlich ist zwischen der Erstauflageebene und der Zentrierung ein Zwischenabsatz ausgebildet, welcher eine sich in einer Zweitauflageebene erstreckende Zweitauflagefläche bildet. Diese Zweitauflagefläche erstreckt sich also distal von der Erstauflageebene in einer Zweitauflageebene und kann ebenfalls wieder zwei, von dem Zwischenabsatz getrennte Flächenabschnitte aufweisen.

Bevorzugt sind die Übergänge zwischen den verschiedenen Auflageebenen stufenartig, insbesondere senkrecht abfallend ausgebildet.

Die Zentrierung der zweistufigen Ausbildung A und der dreistufigen Ausbildung B ist bevorzugt im Wesentlichen gleich groß und/oder geometrisch gleich ausgebildet, z.B. als runder Zentrierstift oder rechteckiger Zentrierblock.

Es hat sich für die Stabilität als besonders zweckmäßig erwiesen, gerade Anzahlen von zueinander beabstandeten Querachsen in Leuchtenlängsrichtung vorzustehen.

Bei vier oder mehr Querachsen gerader Anzahl entlang können auch jeweils zwei sich in Systemlängsrichtung aneinander angrenzende Querachsen Fügepaarungen (Distanzhalter und korrespondierende Öffnung) identischen Typs aufweisen, also z.B. jeweils einstufig A oder zweistufig B ausgebildet sein.

Als zweckmäßig hat sich z.B. erwiesen, auf einer ersten Seite auf den sich jeweils quer zur Systemlängsachse erstreckenden und zueinander beabstandeten Querachsen Fügepartner der Ausbildung dreistufig B - zweistufig A - zweistufig A - dreistufig B auszubilden und auf der gegenüberliegenden zweiten Seite von der Systemlängsachse auf den zueinander beabstandeten Querachsen Fügelemente der Ausbildung zweistufig A - dreistufig B - dreistufig B - zweistufig (A).

Besonders bevorzugt sind die Distanzhalter an der insbesondere aus einem durchsichtigen Kunststoff, z.B. PMMA oder Polycarbonat bestehenden Leuchtenabdeckung innenseitig ausgebildet, ragen also innenseitig von der Leuchtenabdeckung hervor. Fertigungstechnisch ist es vorteilhaft, wenn die Distanzhalter einstückig an der Optik angeformt sind.

Bevorzugt sind die Einbaulagen, also die Erst- und Zweiteinbaulage um 180 Grad im Verhältnis zueinander versetzt, so dass die Optik in den beiden Einbaupositionen also um 180 Grad um die mittlere Rotationsachse, die sich mittig senkrecht durch die Ebene des LED-Moduls erstreckt, zueinander gedreht ist. Damit lassen sich grundsätzlich zwei unterschiedliche Lichtverteilungskurven mit der identischen Optik realisieren.

Die Distanzhalterpaare auf einer Querachse können beidseitig von einem mittigen optisch wirksamen Bereich der Optik angeordnet sein, der z.B. eine Linse, besonders bevorzugt eine sich in Leuchtenlängsrichtung der Optik sich mittig erstreckende Kollimatorlinse umfasst.

Ausführungsformen sehen vor, dass der herabgesetzte Abschnitt der Optik als optisch wirksamer Abschnitt ausgebildet ist und seitlich von diesem herabgesetzten Abschnitt höhere Befestigungsabschnitte ausgebildet sind. Beispielsweise kann der optisch wirksame Abschnitt als eine Art Kanal oder Rinne ausgebildet sein, in der z.B. eine Kollimatorlinse angeordnet ist und mit seitlich daneben und höher gelegenen Befestigungsleisten oder Leisten verbunden ist, die ausgebildet sind zum Verbinden mit Fügepartner. An diesen Befestigungsabschnitten sind sodann die erfindungsgemäßen Distanzhalter ausgebildet.

Mögliche Kombinationen sind z.B. DA Narrow - DA Wide; Asymetric Narrow - Asymetric Wide; Narrow - Very Narrow.

Ausführungsformen sehen vor, dass die einzelnen Komponenten des optischen Systems miteinander und/oder weiteren Leuchtenkomponenten, z.B. einem Leuchtengehäuse oder einem Geräteträger mittels einer stoffschlüssigen Verbindung verbunden und in der Sollposition fixiert werden. Hierzu sind die Bauteile des optischen Systems, also das LED-Modul bzw. mindestens eine LED-Modul und die Optik vorzugsweise aus Kunststoff gefertigt, insbesondere aus PMMA oder Polycarbonat oder anderen geeigneten Kunststoffen bzw. deren Mischungen. Als Verbindungsverfahren kommen alle geeigneten stoffschlüssigen Verbindungen zum Einsatz, also z.B. Kleben, Heißfügen bzw. Verpilzen, also das Verbinden mittels eines Nietvorgangs, bei dem Stifte eines ersten Fügepartners durch Öffnungen des korrespondierenden Fügepartners gedrückt werden und dann die Stiftköpfe durch Erhitzung verbreitert werden zur Realisierung der unverlierbaren Verbindung zwischen den Komponenten. Als besonders vorteilhaft hat sich Ultraschallschweißen erwiesen, weil hiermit besonders geringe Durchlaufzeiten von etwa 1 Sekunde oder weniger für das Verbinden der einzelnen Bauteile miteinander realisierbar sind.

Für den Fachmann ist aber ersichtlich, dass die Erfindung nicht auf Lichtband- oder Langfeldleuchten beschränkt zu sehen ist, sondern bei allen Leuchten eingesetzt werden kann, bei denen ein zumindest abschnittsweise flächiges LED-Leuchtmittel, insbesondere umfassend eine oder mehrere LED-Module, sowie eine in Strahlungsrichtung davor angeordnete Optik zum Einsatz kommen.

Vorzugsweise besteht die Optik im Wesentlichen aus Kunststoff. Fertigungstechnisch besonders vorteilhaft ist die Ausbildung als einteiliges Kunststoffspritzgussteil.

Vorzugsweise sind die Distanzhalter an der Optik und oberseitig auf einer lichtdurchlässigen Ebene angeordnet, die gleichzeitig zumindest teilweise die Lichtaustrittsebene darstellt. Vorzugsweise sind die Distanzhalter einstückig an der Optik ausgebildet.

Naturgemäß betrifft die Erfindung aber auch eine Leuchte umfassend ein zuvor dargestelltes optisches System.

In der folgenden ausführlichen Beschreibung wird auf die beigefügten Zeichnungen Bezug genommen, die Teil dieser bilden und in denen zur Veranschaulichung eine spezifische Ausführungsform gezeigt ist, in der die Erfindung ausgeübt werden kann. In dieser Hinsicht wird Richtungsterminologie wie "oben", "unten", "vorne", "hinten", "vorderes", "hinteres" usw. in Bezug auf die Orientierung der beschriebenen Figur(en) verwendet. Da Komponenten von Ausführungsformen in einer Anzahl verschiedener Orientierung positioniert werden können, dient die Richtungsterminologie nur der Veranschaulichung und ist auf keinerlei Weise einschränkend zu verstehen. Es versteht sich, dass andere Ausführungsformen benutzt und strukturelle oder logische Änderungen vorgenommen werden können, ohne vom Schutzumfang der vorliegenden Erfindung abzuweichen. Die im Rahmen dieser Beschreibung verwendeten Begriffe "verbunden", "angeschlossen" sowie "integriert" sind im Sinne einer direkten als auch einer indirekten Verbindung zu verstehen, eines direkten und indirekten Anschlusses sowie einer direkten oder indirekten Integration. Die Darstellungen in den Figuren sind im Wesentlichen maßstäblich. Zur Veranschaulichung sind Details und bestimmte Bereiche für den Fachmann erkennbar übertrieben dargestellt. Darüber hinaus können die Zeichnungen plakativ vereinfacht sein und enthalten nicht jedes bei der praktischen Ausführungsform gegebenenfalls vorhandene Detail. Es zeigen:
- Figur 1: eine isometrische Ansicht von unten einer erfindungsgemäßen Lichtbandleuchte;
- Figur 2: eine perspektivische Draufsicht der Lichtbandleuchte gemäß Figur 1;
- Figur 3: einen Querschnitt entlang der Linie III-III gemäß Figur 1;
- Figur 4: einen Querschnitt entlang der Linie IV-IV gemäß Figur 1
- Figur 5: einen vergrößerten isometrischen Stirnschnitt des Endmoduls gemäß Figur 3;
- Figur 6: eine isometrische Draufsicht eines als Verlängerungsmodul ausgebildeten Geräteträgers;
- Figur 7: eine isometrische Draufsicht eines als Basismodul ausgebildeten Geräteträgers;
- Figur 8: eine vergrößerte isometrische Draufsicht eines Stirnendes eines Geräteträgers mit Verbindungskontakten;
- Figur 9: eine vergrößerte isometrische Draufsicht zweier stirnseitig elektrisch verbundener Geräteträgermodule
- Figur 10: eine isometrische Draufsicht eines modular aufgebauten Geräteträgers hoher Schutzart mit einer umspritzten und somit geschlossenen elektronischen Brücke;
- Figur 11: der Ablauf des erfindungsgemäßen Herstellungsverfahrens für eine Leuchte, insbesondere eine Lichtbandleuchte;
- Figur 12: ein vergrößerter isometrischer Querschnitt durch eine erfindungsgemäße Lichtbandleuchte mit einem LED-Modul in einer oberen Montageposition;
- Figur 13: der vergrößerte isometrische Querschnitt gemäß Figur 12 mit einem über dem angeordneten Kühlblech LED-Modul in der einer zweiten gegenüber der in Figur 12 abgesenkten Montageposition;
- Figur 14: der vergrößerte isometrische Querschnitt gemäß Figur 12 mit einem LED-Modul in einer abgesenkten Position ohne Kühlblech;
- Figur 15A: eine isometrische Draufsicht einer als Leuchtenabdeckung ausgebildeten Optik;
- Figur 15B: die Optik gemäß Figur 15A mit einem darauf angeordneten LED-Modul;
- Figur 15C: eine vergrößerte Ansicht des Stirnendes der Optik gemäß Figur 15B mit dem LED-Modul in der "tieferen" Erstausrichtung näher an der Optik;
- Figur 15D: die vergrößerte Stirnansicht gemäß Figur 15C mit dem LED-Module in der um 180 Grad gedrehten und "höheren" weiter von der Optik entfernten Zweitausrichtung;
- Figur 15E: die vergrößerte Ansicht des Stirnendes der Optik bei entferntem LED-Modul zur Verdeutlichung der verschiedenen Ebenen eines Distanzhalterpaars.
- Figur 16A: eine vergrößerte Draufsicht einer alternativ ausgebildeten Optik in Ersteinbaulage ;
- Figur 16B: die Optik gemäß Figur 16A in der um 180 Grad im Verhältnis zur Ersteinbaulage gedrehten Zweiteinbaulage;
- Figur 17: eine Draufsicht eines alternativ ausgebildeten LED-Moduls zum Zusammenbau mit der Optik gemäß der in Fig. 16A; 16B dargestellten Optik;
- Figur 18: eine isometrische Frontansicht der Optik gemäß Figur 16A in Ersteinbaulage von unten;
- Figur 19: eine isometrische Frontansicht der Optik gemäß Figur 16B in Zweiteinbaulage von unten;
- Figur 20: eine isometrische Frontansicht des LED-Moduls gemäß Figur 17 von unten;
- Figur 21: eine isometrische Frontansicht des optischen Systems umfassend die Optik und das LED-Modul in Ersteinbaulage , und
- Figur 22: eine isometrische Frontansicht des optischen Systems umfassend die Optik in Zweiteinbaulage gemäß Figur 19 mit dem darauf angeordneten LED-Modul.

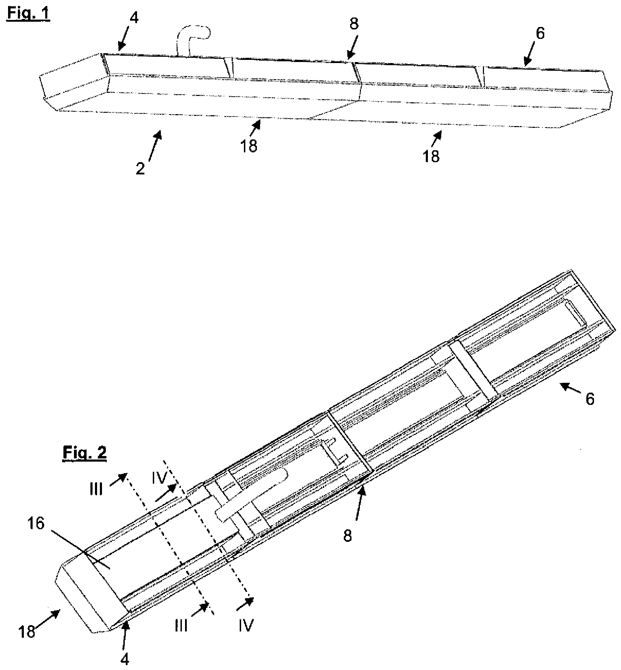

Figur 1 zeigt eine isometrische Längsansicht einer erfindungsgemäßen Lichtbandleuchte 2 von unten, vorliegend aufgebaut aus vier Lichtbandmodulen 4, 6, 8, die jeweils eine rechteckige, kastenartige Geometrie aufweisen und mit ihren innen, aneinander angrenzenden Stirnseiten stirnseitig miteinander befestigt sind zur Bildung der sich in Längsrichtung erstreckenden Lichtbandleuchte mit einer Länge von etwa 1,5 m.

Die Lichtbandmodule 4, 6, 8 sind genauer in der isometrischen Draufsicht der Lichtbandleuchte 2 gemäß Figur 2 zu erkennen. Demnach umfasst die Lichtbandleuchte 2 an den Stirnenden Endmodule 4, 6 und ein zwischen den Stirnenden dieser Endmodule angeordnetes, etwa doppelt so langes Verlängerungsmodul 8.

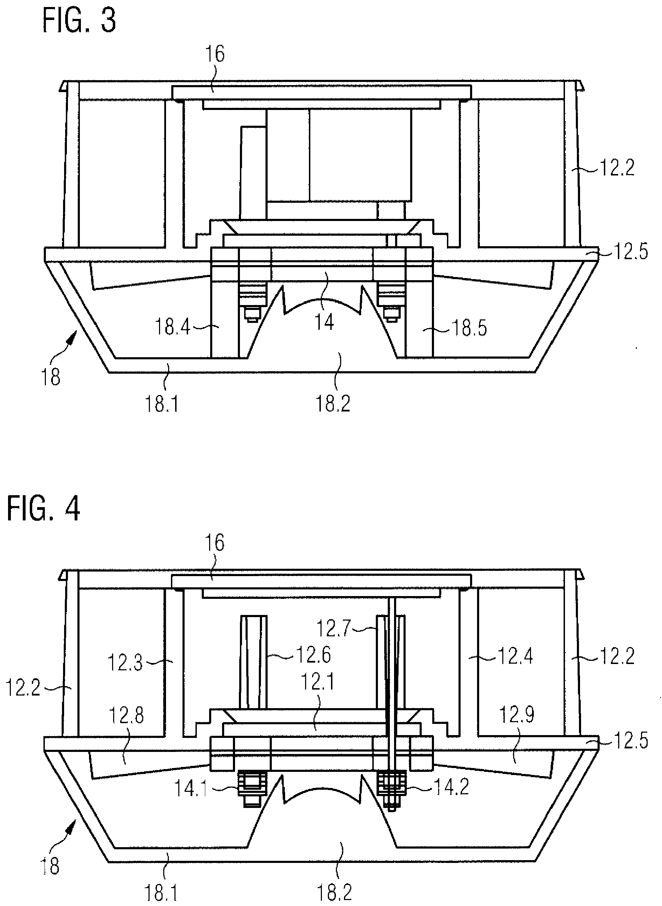

Figur 3 zeigt einen vergrößerten Querschnitt durch das vorderseitige Endmodul 4 entlang der Linie III-III gemäß Figur 2. Das Endmodul besteht aus einem als Kunststoff- Spritzgussteil ausgebildeten Geräteträgers 12, der an seinem unteren Ende eine Hauptebene bzw. Montageebene definiert, welche primär ausgebildet ist zur Befestigung bzw. Montage von LED-Modulen 14, die sich entlang der Mitte des Geräteträgers 12 entlang dessen gesamter Länge erstrecken. Hierzu ist mittig in dem Geräteträger 12 ein zweistufig ausgebildeter Modul-Kanal 12.1 vorgesehen, der geschlossen ist, zumindest in den Endmodulen 4, 6. Dieser Modul-Kanal 12.1 ist geometrisch angepasst an die Größe des aufgenommenen LED-Moduls 14, so dass das LED-Modul 14 also mit seiner LED-Platine bzw. Trägerplatte in den Modul-Kanal 12.1 einsetzbar ist, so dass das LED-Modul 14 etwa zur Hälfte in diesem Modul-Kanal 12.1 aufgenommen ist. Der Modul-Kanal 12.1 kann also durch entsprechende Ausbildung die Bauhöhe reduzieren helfen, weil das LED-Modul 14 nicht mehr flächig auf einem Metallgeräteträger aufgeschraubt sein muss, sondern nunmehr in den Geräteträger 12 aufgenommen werden kann.

Auf der Oberseite der Hauptebene des Geräteträgers 12 ist im Bereich des Außenrandes ein umlaufend geschlossener Versteifungsrahmen 12.2 ausgebildet und seitlich versetzt nach außen von dem mittigen Modul-Kanal 12.1 sind zwei sich ebenfalls quer zur Horizontalebene 12.5 parallel zueinander erstreckende Kanalwände 12.3, 12.4 angeformt, welche etwas stärker als der Versteifungsrahmen 12.2 ausgebildet sind, etwa um das Gleiche nach innen versetzt sind, aber zusammen mit dem Versteifungsrahmen 12.2 die Längssteifigkeit des Geräteträgers 12 wesentlich definieren und somit die Hauptebene bzw. Horizontalebene 12.5 insgesamt filigraner gestalten lassen.

Auf der Oberseite der Kanalwände 12.3, 12.4 ist eine Trägerplatte 16 aufgesetzt, die an ihrer Unterseite verschiedene elektrische Komponenten, wie ein Betriebsgerät aufweist, welche somit in den durch die beiden Kanalwände 12.3, 12.4 gebildeten Kanal ragen, so dass dieser Kanal das Gehäuse für diese elektrischen Komponenten darstellt. Die Trägerplatte 16 ist ebenfalls stoffschlüssig mit den oberen Enden der Kanalwände 12.3, 12.4 verbunden, insbesondere durch Ultraschallschweißen.

Auf der Unterseite der Horizontalebene 12.5 des Geräteträgers 12 ist an dem Außenrand wiederum stoffschlüssig eine lichtdurchlässige Optik 18 befestigt, die mit ihren äußeren Rändern mit dem Außenrand des Geräteträgers 12 bzw. dessen Horizontalebene 12.5 abschließt und sich dann nach unten leicht nach innen verjüngend bis zur unteren Lichtaustrittsfläche 18.1 erstreckt, die in der Mitte mit einer an den jeweiligen Anwendungsfall angepassten Kollimatorlinse 18.2 ausgebildet ist, welche das von den auf dem LED-Modul 14 ausgestrahlte Licht *bündelt* bzw. lenkt.

Figur 4 zeigt hingegen einen Querschnitt durch das Ende des Endmoduls 4 entlang der Linie IV-VI gemäß Figur 2, also dort, wo es an das Verlängerungsmodul 8 angrenzt. An dieser Stelle weist die Oberseite des Modul-Kanals 12.1 einstückig angeformt und beabstandet zueinander zwei hohlzylindrische Kontaktführungen 12.6, 12.7 auf, welche zur umschließenden Aufnahme von Kontaktstiften 16.1, 16.2 dienen, welche die Sekundärkontaktierung der Stromversorgung des LED-Modul 14 verwirklichen. An dem oder den LED-Modulen 14 sind entsprechend positionierte Kontaktklemmen 14.1, 14.2 vorgesehen, in welche die an der Trägerplatte 16 nach unten ragende und als Sekundärkontakt fungierenden Kontaktstifte 16.1, 16.2 einsteckbar sind. Diese Kontaktstifte 16.1, 16.2. werden im Rahmen der Durchsteckmontage einfach durch die Kontaktführungen 12.6, 12.7 geführt eingesteckt in die Kontaktklemmen 14.1,14.2 zur Realisierung der elektrischen Verbindung des LEDC mit dem LEDM.

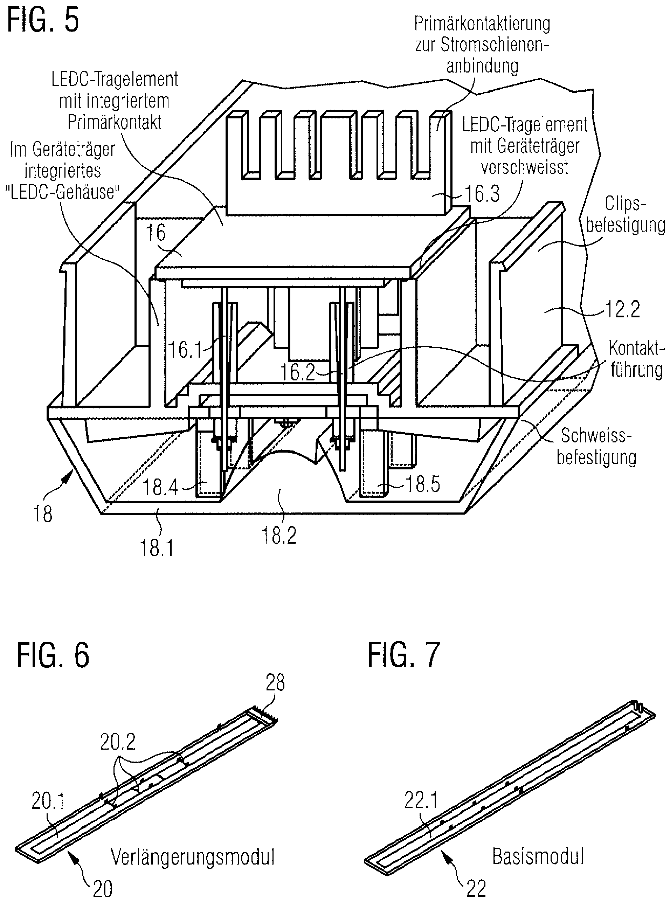

Wie aus dem isometrischen Querschnitt gemäß Figur 5 ersichtlich, ist als Kontaktelement zur Realisierung des Primärkontakts des LEDM mit der Netzspannung auf der Oberseite der Trägerplatte 16 ein kammartig ausgebildeter Kontaktkamm 16.3 angeordnet, welcher in Einbaulage mit den einzelnen Fingern des Kontaktkamms 16.3 in einzelne Leitungen einer Stromschiene eingreift, die z.B. angeordnet ist in der Tragschiene oberhalb des Geräteträgers 12.

Als Befestigungsmittel umfasst der Geräteträger 12 eine au-βenseitig an dem Versteifungsrahmen 12.2 ausgebildete Clipbefestigung, welche durch ein oberseitig an dem Versteifungsrahmen 12.2 ausgebildeten Winkelabsatz bzw. Rastrand, mit dem ein Fügepartner rastend verbindbar ist, bevorzugt ausgebildet als ein korrespondierend ausgebildeter Rastrand an der Tragschiene, so dass sich die komplementär ausgebildeten Rastränder in Einbaulage rastend und gleichzeitig lösbar hintergreifen.

Ferner ist bei Figur 5 zu erkennen, dass an der Geräteträgerunterseite seitlich neben dem Modul-Kanal 12.1 zur optischen Mitte des Geräteträgers 12 hin geneigte Reflexionsflächen 12.8, 12.9 angeformt sind, welche zur Außenseite des Geräteträgers 12 hin ansteigen, also den Lichtstrom zur optischen Mitte bündeln.

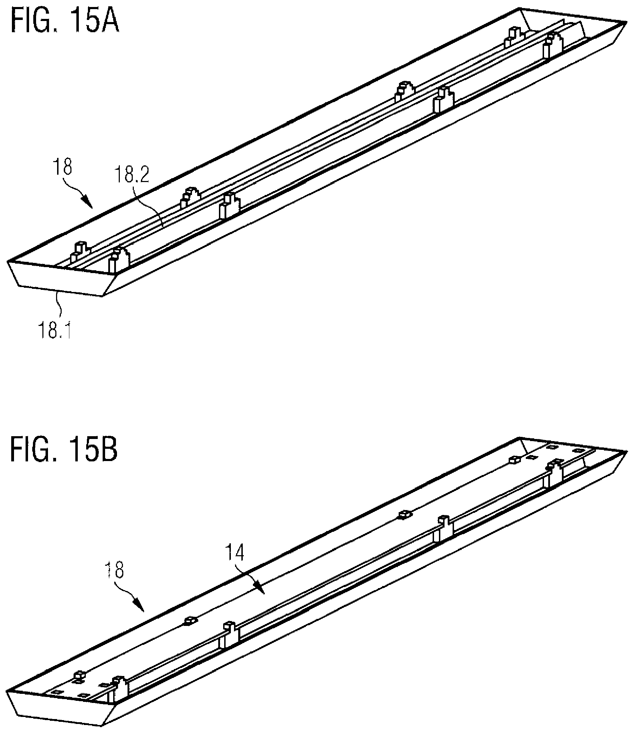

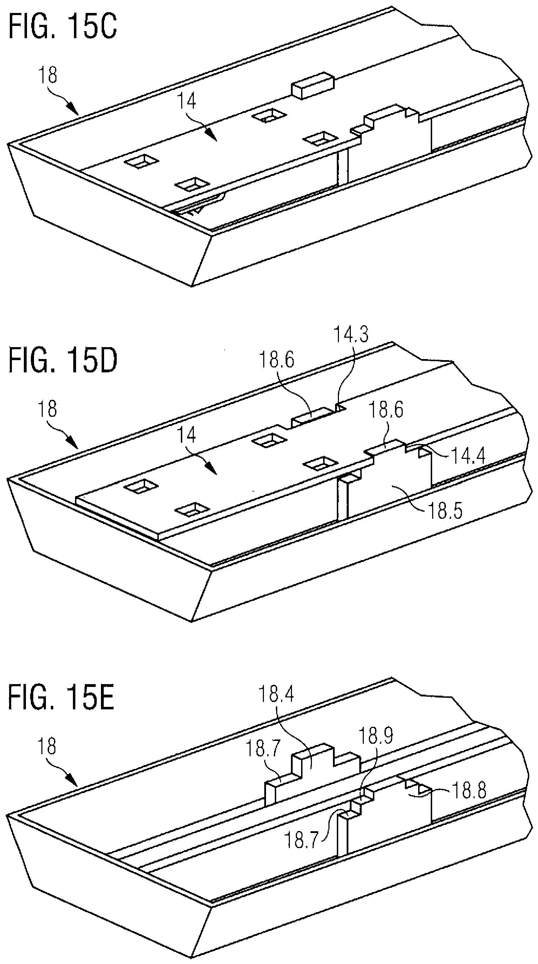

Schließlich ist in Figur 5 der Aufbau des erfindungsgemäßen optischen Systems zu erkennen, welches näher anhand der Figuren 15 bis und 23 genauer erläutert ist. Dieses Codiersystem umfasst an der Innenseite der Optik 18 mehrere in Längsrichtung zueinander beabstandete paarweise gegenüberliegend stabförmig ausgebildete Distanzhalter 18.4, 18.5, welche an ihren oberen Enden zwei unterschiedlich große Auflager aufweisen, und zwar in Form eines unteren und breiteren Erstauflagers 18.7 sowie eines gegenüber diesem unteren Erstlauflager nach oben versetzten und gegenüber dem Erstauflager zudem kleineren Zweitauflagers 18.9. Die Distanzhalter 18.4, 18.5 mit den oberseitig daran ausgebildeten Auflagern sind paarweise beidseitig von der mittleren Kollimatorlinse 18.2 und in Längsrichtung voneinander beabstandet an der Innenseite der Optik 18 vorgesehen zur Auflage der LED-Module 14, welche am Rand mit den Erst- oder Zweitauflagern korrespondierende Ausnehmungen aufweisen, welche so korrespondierend zu den Auflagern ausgebildet sind, dass diese Ausnehmungen entweder auf den breiteren Erstauflagern 18.7 aufliegen, womit das LED-Modul 14 näher an der Optik 18 angeordnet ist, oder auf den kleineren Zweitauflagern 18.9 aufliegen, womit das LED-Modul 14 weiter von der Optik 18 beabstandet ist. Hierzu sind die Ausnehmungen entsprechend positioniert unterschiedlich groß ausgebildet, damit in Einbaulage in einer ersten Ausrichtung die größeren Ausnehmungen auf den Erstauflagern aufliegen und in einer zweiten Ausrichtung, die gegenüber der ersten Ausrichtung z.B. um 180 Grad um eine mittlere Drehachse gedreht ist, mit den kleineren Ausnehmungen auf den Zweitauflagern aufliegen. Somit können durch einfache Drehung der LED-Module 14 um die mittlerer Rotationachse, welche sich senkrecht zur normalen auf der durch das LED-Modul 14 gebildeten Ebene erstreckt, mit derselben Optik 18 zwei unterschiedliche optische Systeme realisiert werden.

Die Figuren 6 und 7 zeigen Basisausführungen von Geräteträgern 20, 22, die lediglich ein im Wesentlichen flächiges und eine Montageebene definierendes Rahmenelement umfassen, welches eine mittige, längserstreckende Modul-Öffnung 20.1, 22.1 für die Aufnahme der LED-Module 14 aufweist.

Bei dem in der Figur 6 dargestellten Geräteträger 20 für ein Verlängerungsmodul wird die mittig ausgebildete, länglich kanalartige Modul-Öffnung 20.1 zudem durch in Leuchtenlängsrichtung zueinander distanzierte Federbrücken 20.2 überbrückt, welche in Einbaulage oberseitig an dem nicht dargestellten LED-Modul 14 anliegen und dieses somit in der Einbaulage fixieren bzw. nach unten drücken, also in der Modul-Öffnung 22.1 in der optischen Sollposition fixieren.

Figur 7 hingegen zeigt einen Geräteträger 22 ausgebildet als Basismodul mit einer mittigen, länglich kanalartigen Modul-Öffnung 22.1 ohne Feder-Brücken.

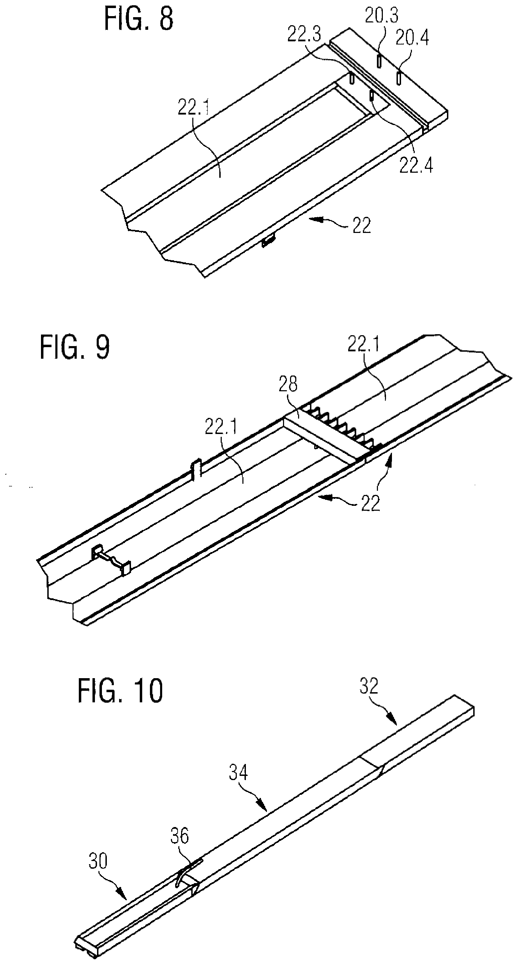

Die stirnseitigen Enden des Geräteträgers 20, 22 können jeweils über eine Verbindungsbrücke 28 elektrisch miteinander verbunden sein, deren Aufbau besser in der vergrößerten Stirnansicht gemäß Figur 9 ersichtlich ist. Demnach können insbesondere an den angrenzenden kürzeren Stirnenden des Geräteträgers 20, 22 paarweise elektrische Kontaktstifte 20.3, 20.4 bzw. 22.3, 22.4 eingeformt sein, welche aus der Hauptebene des Geräteträgers 20, 22 nach oben ragen. Jeweils vier derartig an den in Einbaulage angrenzenden Stirnenden angrenzende Kontaktstifte 20.3, 20.4; 22.3, 22.4 sind über ein in der Figur 9 und der Figur 6 dargestellt aufgesetzte Verbindungsbrücke 28 elektrisch miteinander verbindbar, so dass somit die Durchgangsverdrahtung zwischen den in Einbaulage stirnseitig angrenzenden Geräteträgermodulen realisiert wird.

Figur 10 zeigt eine alternative Ausführungsform einer alternativ aufgebauten modularen Lichtbandleuchte 2 umfassend zwei stirnseitig angeordnete Endmodule 30, 32 und ein dazwischen angeordnetes, deutlich längeres Verlängerungsmodul 34. Das in der Figur vordere Endmodul 30 umfasst wiederum zur Aufnahme der elektronischen Komponenten einen mittig ausgebildeten Kanal 12.1 mit einer oberseitig darauf befestigten Trägerplatte 16 mit den elektrischen Leuchtenkomponenten. Anstelle eines Kontaktkamms 16.3 ist hier ein Kabel 36 für die Primärkontaktierung vorgesehen. Das mittige Verlängerungsmodul 34 umfasst im Gegensatz zu den in den Figuren 6 bis 9 dargestellten Ausführungsformen einen oberseitig geschlossenen Modul-Kanal 12.1 bzw. eine Brücke zur fixierenden Aufnahme der LED-Module 14. Auch das in der Figur hintere Endmodul 32 ist mit einem solchen, geschlossenen, mittigen Modul-Kanal 12.1 ausgebildet, so dass die LED-Module 14 sich auch über die Enden der Geräteträgermodule 30, 32, 34 erstrecken können.

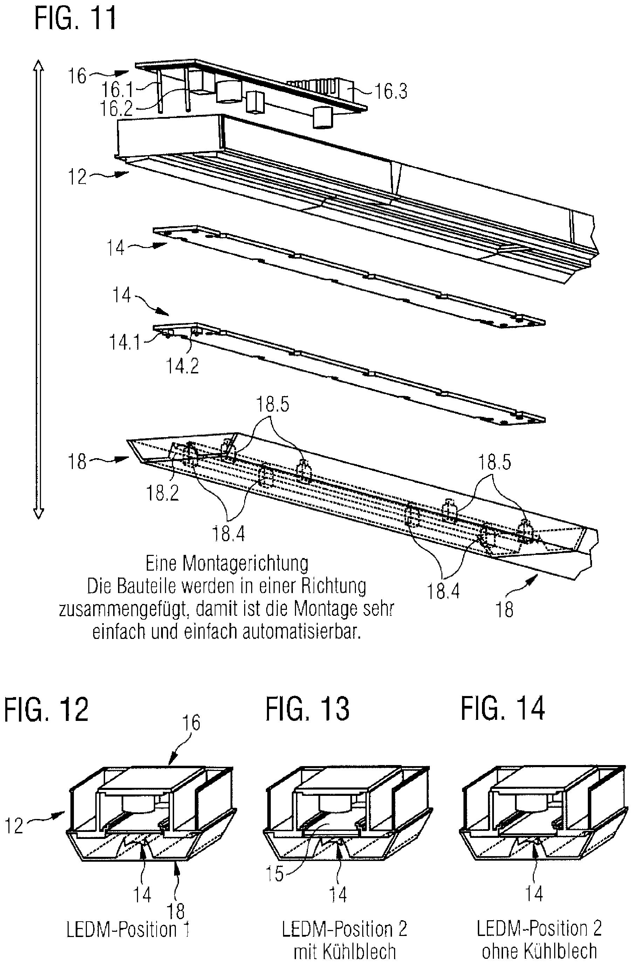

Die Figur 11 verdeutlicht das erfindungsgemäße Herstellungs- bzw. Montageverfahren, wonach die Montage lediglich in einer Montagerichtung erfolgen kann, und zwar von unten nach oben ohne Drehung der Bauteile bzw. Komponenten. Zunächst wird auf einer nicht dargestellten Montageebene die Optik 18 aufgesetzt und sodann auf diese oberseitig in der entsprechenden Ausrichtung ein oder mehrere LED-Module 14, welche also auf den tieferen Erstlauflagern 18.7 oder um 180 Grad gedreht auf den höheren Zweitauflagern 18.9 der an der Optik 18 angeformten Distanzhaltern 18.4, 18.5 aufsitzen, die jeweils paarweise gegenüberliegend zur optischen Mitte und entlang der Optiklängsachse zueinander beabstandet sind. Sodann wird der hier aus Geräteträgermodulen zusammengesetzte Geräteträger 12 auf die Optik 18 und die LED Module 14 aufgesetzt, wodurch die LED-Module 14, die linear stoßseitig aneinander angrenzend innerhalb des Modul-Kanals 12.1 des Geräteträgers 12 aufgenommen sind, in ihrer optischen Sollposition lagefixiert werden. Sodann kann die bereits mit elektrischen Leuchtenkomponenten bestückte Trägerplatte 16 in einen oberseitigen Kanal des Geräteträgers 12 aufgesetzt werden, so dass die Kontaktstifte 16.1, 16.2 aufgenommen sind in den Kontaktführungen 12.6, 12.7 und in Einbaulage unterseitig eingreifen in die Kontaktklemmen 14.1, 14.2 des LED-Moduls 14. Abschließend werden die einzelnen Leuchtenbauteile/ -komponenten der vollständig aus Kunststoff gefertigten Leuchte, durch Ultraschallschweißen in dieser somit definierten Sollposition stoffschlüssig und somit unlösbar miteinander verbunden.

Die Figuren 12 bis 14, welche jeweils isometrische stirnseitige Querschnitte durch die Lichtbandleuchte darstellen, verdeutlichen die Möglichkeiten, die LED-Module 14 unterschiedlich in unterschiedlicher Höhe innerhalb des Modulkanals 12.1 anzuordnen.

Bei der Ausführungsform gemäß Figur 12 ist das LED-Modul 14 direkt innerhalb des Modulkanals 12.1 aufgenommen und liegt oberseitig an den beidseitig ausgebildeten Absätzen innerhalb des Modulkanals 12.1 an.

Die in Figur 13 dargestellte Ausführungsform umfasst hingegen oberhalb des LED-Moduls 14 ein leistungssteigerndes Kühlblech 15, dessen Größe der des LED-Moduls 14 entspricht. Das LED-Modul 14 ist aber um ca. 1 mm im Vergleich zur Ausführungsform gemäß Figur 12 nach unten abgesenkt bzw. tiefer angeordnet.

Figur 14 zeigt hingegen eine Ausführungsform, bei welcher das LED-Modul 14 in einer abgesenkten Position ist und dabei ohne Kühlblech in dem Modulkanal 12.1 aufgenommen ist, was in diesem Fall dadurch erfolgt, dass der Geräteträger 12 mindestens eine, vorzugsweise mehrere Federbrücken ähnlich wie in Figur 6 vorgesehen sind, welches das LED-Modul 14 nach unten an die Optik 18 presst, wobei die mindestens eine Federbrücke einen so großen Federweg aufweist, dass das LED-Modul 14 allein bzw. mit dem Kühlblech 15 zwischen Optik 18 und der Federbrücke einsetzbar ist. Vorzugsweise sind die Federbrücken in Leuchtenlängsrichtung an dem Geräteträger 12 ausgebildet, wobei diese entweder an dem Geräteträger ausgebildet oder als mit dem Geräteträger verbindbare Bauteile ausgebildet sein können.

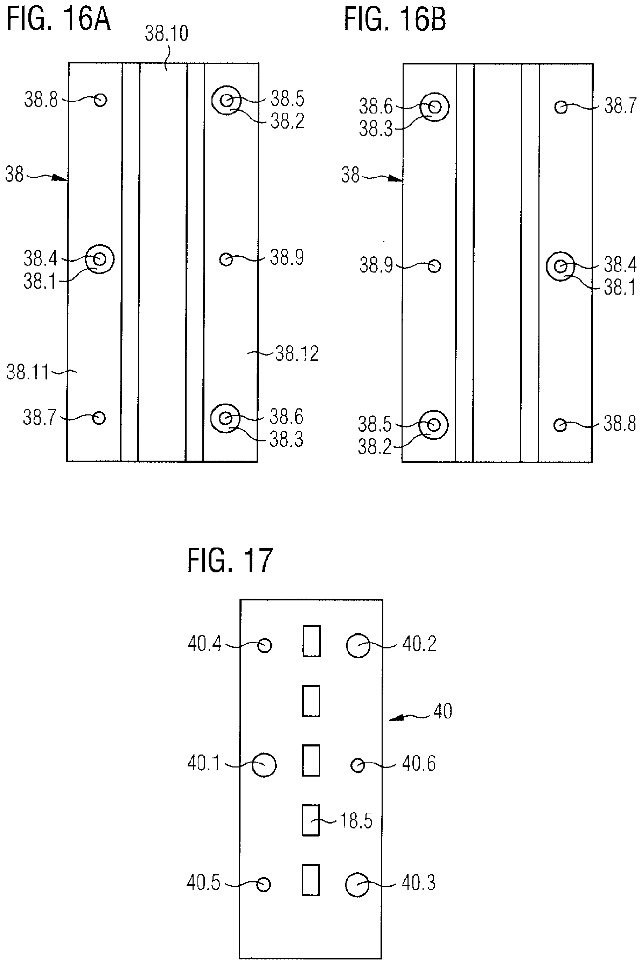

Die Figuren 15 und 16 verdeutlichen die Funktionsweise des erfindungsgemäßen optischen Systems umfassend die aus durchsichtigem Kunststoff gefertigte Optik 18 und das darauf angeordnete, mindestens eine, flächige LED-Modul 14.

Die wannenförmige Optik 18 umfasst am unteren Ende eine im Wesentlichen ebene Lichtaustrittfläche 18.1, auf deren Oberseite mittig die Kollimatorlinse 18.2 angeformt ist. An den Seiten weist die Lichtaustrittsfläche 18.1 sich konisch kontinuierlich verbreiternde Seitenwände auf.

Entlang der Längserstreckungsrichtung der Optik 18 sind einstückig auf der Innenseite beidseitig von der mittigen Kollimatorlinse 18.2 auf gleichen Querachsen zur Längserstreckungsrichtung Distanzhalterpaare umfassend jeweils einen ersten, linksseitig von der sich entlang der mittleren Leuchtenlängsachse Kollimatorlinse 18.2 ausgebildeten Distanzhalter 18.4 und einen zweiten, rechtsseitig von der Kollimatorlinse 18.2 ausgebildeten Distanzhalter 18.5 angeformt, und zwar insgesamt 4 Distanzhalterpaare entlang der gesamten Leuchtenlängsachse auf zueinander beabstandeten Querachsen. Auf diese durch die Distanzhalter 18.4, 18.5 gebildeten Distanzhalterpaare ist das flächige LED-Modul 14 mit den LED zur Optik 18 gerichtet aufgesetzt.

Das LED-Modul 14 weist an den seitlichen Längskanten zum Außenrand offene und an die Öffnungen 14.3, 14.4 zur Bildung von auf gleicher Querachse, also in Einbaulage auf gleicher Längserstreckungsrichtung liegende randseitig offene Ausnehmungspaare auf, nämlich an der in der Figur 15C rechten Längskante eine längere und somit größere Auflageöffnung 14.3 sowie auf gleicher Querachse zur Längserstreckungsrichtung an der gegenüberliegenden Längskante, also mit selber geometrischer Mitte eine randseitig offene und kleinere Zentrieröffnung 14.4, die etwa halb so lang wie die an der gegenüberliegenden Längskante des LED-Moduls 14 vorgesehene Auflageöffnung 14.3 ist. Die Zentrieröffnung 14.4 ist gerade ausreichend groß für den Durchtritt eines als Zentrierung fungierenden Zentrierblocks 18.6 an den distalen Oberenden der Distanzhalter 18.4, 18.5.

Die Figur 15A zeigt eine perspektivische Draufsicht der Optik 18 mit einer auf der Innenseite mittig entlang der Optiklängsachse erstreckende Kollimatorlinse 18.2. Beidseitig von dieser mittig angeordneten Kollimatorlinse 18.2 sind jeweils auf vier in Längsrichtung zueinander beabstandeten Querachsen Distanzhalterpaare umfassend jeweils einen einstufigen Distanzhalter 18.4 und einen zweistufigen Distanzhalter 18.5 vorgesehen. JederDistanzhalter 18.4, 18.5 weist einen sich entlang der Distanzhaltermittelachse erstreckenden mittig distal hochstehenden und eckigen Zentrierblock 18.6 auf, dessen Mittelachse auf derselben Querachse in Leuchtenlängs- bzw. Systemlängsrichtung liegt.

Jeweils zwei solcher in Leuchtenlängsrichtung voneinander beabstandete und auf je einer Querachse gleich weit von der Optikmittelachse beabstandete Distanzhalter 18.4, 18.5 bilden somit ein Distanzhalterpaar, von denen insgesamt 4 in Längsrichtung der Optik 18 zueinander beabstandet vorgesehen sind, und zwar jeweils zwei Distanzhalterpaare näher an den Stirnenden und jeweils zwei innenseitige Distanzhalterpaare nach außen versetzt von der mittleren Querachse der Optik 18.

Gemäß den Figuren 15A und 15B sind die Distanzhalter 18.4, 18.5 eines jeweiligen Distanzhalterpaars auf einer Querachse immer unterschiedlich ausgebildet, also und entweder einstufig A oder zweistufig B, aber jeweils mit einem gleich großen mittleren Zentrierblock 18.6 mit gleicher Mittelachse, also auf gleicher Entfernung von dem jeweiligen Stirnende also kollinear zueinander ausgerichtet.

Die Distanzhalter 18.4, 18.5 eines Distanzhalterpaars auf einer sich quer zur Optik- bzw. Systemlängsachse erstreckenden Querachse sind bei dieser Ausführungsform grundsätzlich als rechteckige längliche Körper ausgebildet, die sich von einem proximalen Distanzhalterunterende ausgehend von der Innenseite der Optik 18 distal nach oben erstrecken bis zu einer sich in einer Erstauflageebene erstreckende Erstauflagefläche 18.7, welche bei beiden auf einer Querachse ausgebildeten Distanzhaltern (einstufig A, zweistufig B) auf derselben Höhe, also in derselben Ebene liegen. Von dem in den Figuren linksseitige angeordneten, einstufigen Distanzhalter 18.4 erstreckt sich sodann mittig entlang der Distanzhaltermittelachse ein rechteckiger Zentrierblock 18.6 weiter distal nach oben, dessen Größe geringfügig kleiner ist als die geometrisch komplementären, kleineren und randseitig offenen Erstausnehmungen 14.4 in der Modulebene des LED-Moduls 14, so dass also die Seitenkanten des LED-Moduls 14 in der unteren Erstausrichtung auf dieser somit an den einstufigen Distanzhaltern 18.4 ausgebildeten unteren Erstauflageflächen 18.7 aufliegen.

Zur Realisierung einer kippfreien Anordnung sind die in Längserstreckungsrichtung linksseitig von der mittleren Kollimatorlinse 18.2 auf den Querachsen voneinander beabstandeten Distanzhalter 18.4 in der Reihenfolge einstufig A - zweistufig B - zweistufig B - einstufig A und die rechtsseitig von der mittigen Kollimatorlinse 18.2 in Leuchten- bzw. Systemlängsrichtung äquidistant von der Systemlängsachse an diesen Querachsen ausgebildeten Distanzhalter 18.5 in der Reihenfolge zweistufig B - einstufig A - einstufig A - zweistufig B ausgebildet.

Die zweistufige Ausführungsform B des Distanzhalters 18.5 weist gegenüber der einstufigen Ausführungsform zwischen der sich in der Erstauflageebene erstreckenden Erstauflageflächen 18.7 und dem mittleren Zentrierblock 18.6 einen rechteckigen Zwischenabsatz 18.8 zur Bildung einer sich in einer Zweitauflageebene erstreckenden Zweitauflagefläche 18.9 auf, die also im Verhältnis zur Erstauflagefläche 18.7 höher bzw. distal von dieser angeordnet ist.

Die Figur 15C zeigt das LED-Modul 14 in der tieferen Erstausrichtung, bei welcher also die längeren, seitlich in dem LED-Modul 14 korrespondierend zu den Distanzhaltern, randseitig offenen Auflageöffnung 14.3 auf den unteren, korrespondierenden Erstauflageflächen 18.7 der zweistufigen Distanzhalter 18.5 aufliegen, so dass auch die sich auf einer Querachse gegenüberliegenden und nur der Größe der Zentrierstifte entsprechenden Zentrieröffnung 14.4 auf der Erstauflagefläche der einstufigen Ausführungsform A 18.4 der Distanzhalter aufliegen und das LED-Modul 14 somit näher an der darunter gelegenen Optik 18 angeordnet ist als bei der in der in Figur 15D dargestellten höheren Zweitausrichtung, welche gegenüber der in der Figur 15C dargestellten Erstausrichtung um 180 Grad gedreht ist. Somit wirken die gegenüber den randseitig offenen Auflageöffnung 14.3 kleineren und ebenfalls randseitig offenen Zentrieröffnung 14.4 mit dem rechten Distanzhalter zusammen und liegt somit auf der gegenüber der Erstauflagefläche 18.7 höher oder distaler gelegenen den Zweitauflageflächen 18.9 der zweistufig ausgebildeten Distanzhalter an den zueinander axial zueinander beabstandeten Querachsen auf. Somit ist das LED-Modul 14 weiter von der sich entlang der Leuchtenlängsachse mittig erstreckenden Kollimatorlinse 18.2 der Optik 18 entfernt, wobei der Höhenunterschied etwa 0,3 bis 2 mm, vorzugsweise etwa 0,7 beträgt.

Die Figur 16A zeigt eine Draufsicht einer alternativ ausgebildeten Optik 38 in der Ersteinbaulage und die Figur 16B diese Optik 38 in der um 180 Grad im Verhältnis zur Erstausrichtung gedrehten Zweiteinbaulage.

Die dargestellte Ausführungsform weicht zudem von der zuvor beschriebenen Ausführungsform dadurch ab, dass der mittlere Bereich der Optik 38 mit der Kollimatorlinse 38.10 in einem gegenüber den seitlich daran anschließenden Trägerleisten 38.11, 38.12 in einer abgesenkten Rinne angeordnet ist, die seitlichen Trägerleisten 38.11, 38.12 also gegenüber diesem mittleren Optikbereich nach oben versetzt sind.

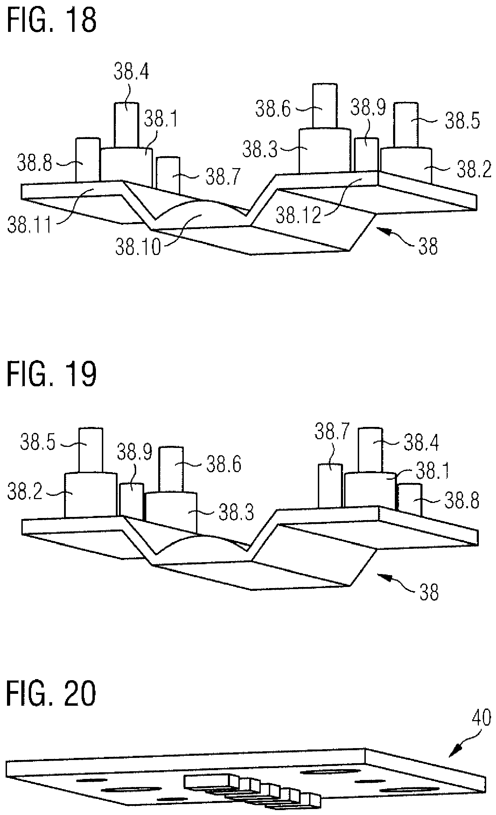

Auf diesen flächigen Trägerleisten 38.11, 38.12 der Optik 38 sind oberseitig die erfindungsgemäßen Distanzhalter angeordnet. Jeder Distanzhalter umfasst einen mittleren Zentrierstift 38.4, 38.5, 38.6, 38.7, 38.8, 38,9 um den auf der in Figur 19 linken Seite um den mittleren Zentrierstift 38.4 und auf der rechten Seite um den in der Figur vorderen Zentrierstift 38.6 und hinteren Zentrierstift 38.5 jeweils ein kreisringförmiges und als Zweitauflager fungierendes Ringauflager 38.1, 38.2, 38.3 ausgebildet ist, das also jeweils distal von den von den Trägerleisten 38.11, 38.12 gebildeten Ebene angeordnet ist, wobei sich beide Trägerleisten 38.11, 38.12 auf derselben Ebene erstrecken.

Figur 18 zeigt eine Draufsicht eines LED-Moduls 40 ausgebildet zum Zusammenbau mit den in den Figuren 16A, 16B dargestellten Optik 38. Dieses LED-Modul 40 weist an entsprechenden Positionen in Querrichtung zur Mittellängsachse, größere kreisförmige Erstausnehmungen 40.1, 40.2, 40.3 auf, durch welche die größeren Ringauflager 38.1, 38.2, 38.3 der Optik 38 hindurchtreten können, wohingegen die kleineren und ebenfalls kreisförmigen Zweitausnehmungen 40.4, 40.5, 40.6 so korrespondierend versetzt zueinander ausgebildet sind, dass durch diese in der Zweiteinbaulage nur die Zentrierstifte 38.7, 38.8, 38.9 der Optik 38 hindurchtreten können und das LED-Modul 40 somit in der Zweiteinbaulage der Optik 38 auf den Ringauflagern 38.1, 38.2, 38.3 aufliegt und somit weiter beabstandet ist von der sich entlang der Mittellängsachse erstreckenden Kollimatorlinse 38.10.

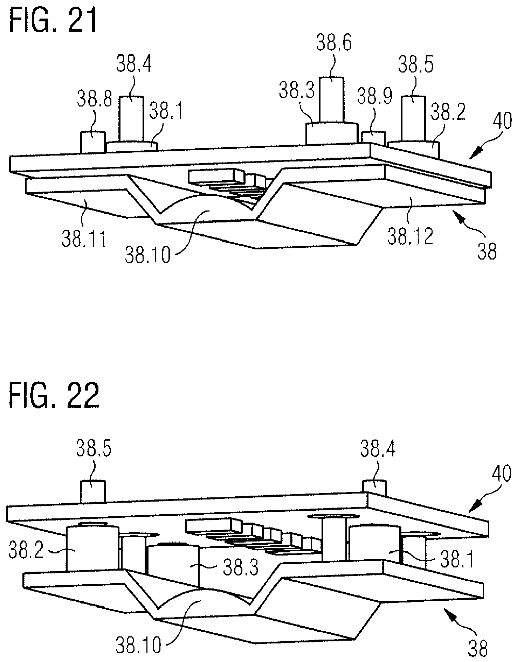

Wird nun die Optik 38 in der Figur 18 dargestellten Erstausrichtung mit dem LED Modul 40 verbaut, können diese größeren Ringauflager 38.1, 38.2, 38.3 durch die größeren Erstausnehmungen 40.1, 40.2 und 40.3 des LED-Moduls 40 hindurchtreten, so dass dieses unmittelbar auf den Trägerleisten 38.11, 38.12 aufliegt, wie dieses in der Figur 21 dargestellt ist und somit die in Reihe entlang der Mittellängsachse des LED-Moduls 40 angeordneten LEDs näher und optisch ausgerichtet an der Kollimatorlinse 38.10 liegen.

In der Figur 22 ist die Optik 38 hingegen in der um 180 Grad gedrehten Zweiteinbaulage angeordnet, so dass nunmehr nur die Zentrierstifte 38.4, 38.5 und 38.6 durch die kleineren Zweitausnehmungen 40.4, 40.5, 40.6 hindurchtreten können und das LED-Modul 40 somit auf den Ringauflagern 38.1, 38.2, 38.3 aufliegen und das LED-Modul 40 somit weiter von der Optik 38 beabstandet ist, womit sich eine breitere Abstrahlcharakteristik von z.B. 20 Grad im Vergleich zur Lichtverteilungskurve von ca. 12 Grad gemäß der in Figur 21 dargestellten Ersteinbaulage ergibt.

Somit lassen sich mit denselben Bauteilen, also mit dem identischen optischen System umfassend die Optik 38 und das LED-Modul 40 unterschiedliche Lichtverteilungskurven dadurch realisieren, dass die Optik 38 entweder in der Einbaulage weiter zu dem LED-Modul 40 beabstandet ist oder in der Zweiteinbaulage näher an dem LED-Modul 40 angeordnet ist.

### Bezugszeichenliste

- 2: Lichtbandleuchte
- 4, 6: Endmodul
- 8: Verlängerungsmodul
- 12: Geräteträger
- 12.1: Modul-Kanal
- 12.2: Versteifungsrahmen
- 12.3, 12.4: Kanalwand
- 12.5: Hauptebene/Horizontalebene
- 12.6, 12.7: Kontaktführung
- 12.8; 12.9: Reflektionsflächen
- 14: LED-Modul
- 14.1, 14.2: Kontaktklemme
- 14.3: Auflageöffnung (größer)
- 14.4: Zentrieröffnung (kleiner)
- 15: Kühlblech
- 16: Trägerplatte
- 16.1, 16.2: Kontaktstift
- 16.3: Kontaktkamm
- 18: Optik
- 18.1: Lichtaustrittsfläche
- 18.2: Kollimatorlinse
- 18.4: Distanzhalter
- 18.5: Distanzhalter
- 18.6: Zentrierblock
- 18.7: Erstauflagefläche
- 18.8: Zwischenabsatz
- 18.9: Zweitauflagefläche
- 20: Geräteträger
- 20.1: Modul-Öffnung
- 20.2: Federbrücke
- 20.3, 20.4: Kontaktstift
- 22: Geräteträger
- 22.1: Modul-Öffnung
- 22.3; 22.4: Kontaktstift
- 28: Verbindungsbrücke
- 30, 32: Endmodul
- 34: Verlängerungsmodul
- 36: Kabel
- 38: Optik
- 38.1, 38.2, 38.3: Ringauflager
- 38.4, 38.5, 38.6: Zentrierstift
- 38.7, 38.8, 38.9: Zentrierstift
- 38.10: Kollimatorlinse
- 38.11, 38.12: Trägerleiste
- 40: LED-Modul
- 40.1, 40.2, 40.3: Erstausnehmung
- 40.4, 40.5, 40.6: Zweitausnehmung

## Patentansprüche

1. Optisches System einer Leuchte, insbesondere eine Langfeldleuchte, im Besonderen eine Lichtbandleuchte, ausgebildet zur lösbaren Verbindung mit einer mit einem Bauträger verbundenen Tragschiene zur Aufnahme und Führung einer Durchgangsverdrahtung, umfassend zwei komplementär in Einbaulage zusammenwirkende und im Wesentlichen, zumindest abschnittsweise flächige Fügepartner mit mindestens einem im Wesentlichen flächigen LED-Modul (14; 40), das eine Modulebene definiert und ein sich in dieser entlang einer Längsachse erstreckende Modullängsachse und mindestens eine LED zur Erzeugung eines in einer Direktlichtrichtung strahlenden Lichtstroms aufweist, sowie eine in der Direktlichtrichtung in Einbaulage vor dem mindestens einen LED-Modul angeordnete Optik (18; 38) zur Erzeugung einer gewünschten Lichtverteilungskurve für eine Ausleuchtung einer Sehaufgabe, wobei die Optik eine Optikebene definiert und eine sich in dieser entlang einer Längsachse erstreckende Optiklängsachse aufweist, wobei die Fügepartner in einer Einbaulage eine sich entlang einer Längsachse des optischen Systems erstreckenden Systemlängsachse ausbilden, **DADURCH GEKENNZEICHNET, DASS** zwischen den Fügepartner dargestellt ausgebildete Distanzhalter vorgesehen sind, dass diese bei einer Drehung der Optik in mindestens zwei verschiedene Einbaulagen, eine Ersteinbaulage und eine von dieser verschiedenen Zweiteinbaulage gewährleisten, dass die Fügepartner in jeder Einbaulage optisch optimiert, also insbesondere lagefixiert und ausgerichtet sind, dass die Fügepartner der Ersteinbaulage in eine erste optische Distanz zueinander einnehmen und in der Zweiteinbaulage eine zweite, von der ersten optischen Distanz unterschiedliche zweite optische Distanz einnehmen.

2. Optisches System nach Anspruch 1, **DADURCH GEKENNZEICHNET, DASS** mindestens drei voneinander beabstandete und sich quer zur Systemlängsachse erstreckende Querachsen vorgesehen sind, wobei sich durch diese Querachsen beidseitig äquidistant von der mittleren Systemlängsachse je eine Distanzhaltermittelachse erstreckt, wobei entlang jeder Distanzhalterlängsachse erstreckend je ein im Wesentlichen stabförmiger Distanzhalter ausgebildet ist, von denen jeder Distanzhalter sich von einem proximalen, mit einem ersten Fügepartner verbundenen Distanzhalterunterende bis zu einem distalen Distanzhalteroberende erstreckt, an dem eine Zentrierung ausgebildet ist, die in Einbaulage zentrierend in je eine koaxial zur Distanzhalterlängsachse ausgebildeten Öffnung in dem angrenzenden Fügepartner einsteckbar ist, wobei jeweils zwei auf einer Querachse angeordnete Distanzhalter ein Distanzhalterpaar ausbilden, wobei jeweils ein Distanzhalter eines Distanzhalterpaars auf einer Querachse mindestens eine Erstauflagefläche umfasst, die eine sich zur Ebene des angrenzenden Fügepartners erstreckende Erstauflageebene definiert und ferner ausgebildet ist zur zentrierenden Auflage des komplementären Fügepartners, wobei in dem in Einbaulage angrenzenden Fügepartner koaxial um die von der Systemlängsachse äquidistant beabstandeten Distanzhalterlängsachsen Öffnungen zur Bildung eines Öffnungspaars ausgebildet sind, von denen eine erste Öffnung lediglich ausreichend groß für den Durchtritt der Zentrierung eines Distanzhalters ausgebildet ist und die zweite Öffnung entsprechend größer für den Durchtritt der ersten Auflagefläche ausgebildet ist, wobei die auf einer Querachse an beiden Fügepartnern ausgebildeten Distanzhalter- und Öffnungspaare korrespondierend ausgebildet sind und wobei die Distanzhalterpaare von mindestens zwei der drei Querachsen entsprechend ausgebildet, also gleich angeordnet sind.

3. Optisches System nach Anspruch 1 oder 2, **DADURCH GEKENNZEICHNET, DASS** eine an den Distanzhaltern ausgebildete Auflageebene, vorzugsweise die proximaler gelegene Erstauflageebene als eine durchgehende Ebene ausgebildet ist.

4. Optisches System nach einem der Ansprüche 1 bis 3, **DADURCH GEKENNZEICHNET, DASS** die Erstauflageebene in einem Bauteil des Optischen Systems integriert ist.

5. Optisches System nach einem der Ansprüche 2 bis 4, **DADURCH GEKENNZEICHNET, DASS** die Erstauflageebene als eine Trägerleiste (38.11, 38.12) der Optik (38) ausgebildet ist.

6. Optisches System nach Anspruch 5, **DADURCH GEKENNZEICHNET, DASS** die Optik (38) zwei seitliche, als Befestigungsbereich fungierende Trägerleisten (38.11, 38.12) mit Distanzhaltern (18.4, 18.5) aufweist und zwischen diesen Trägerleisten ein optischer Bereich ausgebildet ist.

7. Optisches System nach Anspruch 6, **DADURCH GEKENNZEICHNET, DASS** der Befestigungsbereich und der optische Bereich auf unterschiedlichen Ebenen angeordnet sind.

8. Optisches System nach einem der vorhergehenden Ansprüche, **DADURCH GEKENNZEICHNET, DASS** die Optikebene die Lichtaustrittsebene der Optik (18; 38) darstellt.

9. Optisches System nach einem der vorhergehenden Ansprüche, **DADURCH GEKENNZEICHNET, DASS** die Distanzhalter (18.4; 18.5) alle an einem Fügepartner und die komplementären Öffnungen alle an dem komplementär ausgebildeten, anderen Fügepartner ausgebildet sind.

10. Optisches System nach einem der Ansprüche 1 bis 8, **DADURCH GEKENNZEICHNET, DASS** die Distanzhalter und komplementären Öffnungen an beiden Fügepartnern ausgebildet sind.

11. Optisches System nach einem der vorhergehenden Ansprüche, **DADURCH GEKENNZEICHNET, DASS** die Zentrierungen zylindrische Zentrierstifte (38.4, 38.5, 38.6, 38.7, 38.8, 38.9) und/oder als eckige Zentrierblöcke umfassen und dass die korrespondierenden Öffnungen in dem komplementären Fügepartner geometrisch angepasst an die Zentrierungen ausgebildet sind.

12. Optisches System nach einem der vorhergehenden Ansprüche, **DADURCH GEKENNZEICHNET, DASS** der Unterschied zwischen den optischen Distanzen in der Ersteinbaulage und der Zweiteinbaulage 0,3 bis 2 mm, bevorzugt 0,7 mm beträgt, und dass sich der Abstrahlwinkel von ca. 20 auf ca. 28 Grad verändert.

13. Leuchte umfassend ein optisches System nach einem der vorhergehenden Ansprüche

14. Leuchte nach Anspruch 13, **DADURCH GEKENNZEICHNET, DASS** diese als Langfeldleuchte, besonders bevorzugt als mit einer Tragschiene verbindbare Lichtbandleuchte eines Lichtbandsystems ausgebildet ist.
